# EUROPEAN PATENT APPLICATION

(11) **EP 4 530 095 A1**
(43) Date of publication of application: **02.04.2025**
(21) Application number: 24202893.4
(22) Date of filing: 26.09.2024
(51) Int. Cl.: B60C 1/00, C08L 9/00, C08L 9/06, C08K 3/36, C08K 3/22, C08L 15/00, C08L 57/02, C08L 45/00

(54) **RUBBER COMPOSITION AND ALL-SEASON TIRE TREAD**

(30) Priority: 28.09.2023 US 202318476672
(71) Applicant: The Goodyear Tire & Rubber Company, Akron, OH 44316 (US)
(72) Inventor: KRUTH, Alexis Anne, Burlington, NC, 27215 (US); DENNIS-PELCHER, Kate Elizabeth, Uniontown, 44685 (US); BUTTI, Bryce Alexander, Avon, Ohio, 44011 (US); GULAS, Brad Stephen, Fairlawn, 44333 (US); MAINZER, Cecilia, Hinckley, Ohio, 44233 (US)
(74) Representative: Kutsch, Bernd

(57) **Abstract**

A vulcanizable rubber composition for use in a tire tread is disclosed. The rubber composition comprises 50 to 70 parts by weight per hundred parts rubber (phr) of polybutadiene rubber; 30 to 50 phr of a solution-polymerized styrene butadiene rubber with a styrene content of from 5 to 15 wt. % and a Tg in a range of from -70°C to -50°C; at least 90 phr of silica, alternatively at least 100 phr of silica or from 90 to 160 phr of silica; at least 6 parts by weight per hundred parts of the silica of an organosilane coupling agent; at least 2 phr of processing oil; at least 40 phr of resin, the resin comprising a hydrocarbon traction resin and a tackifier resin; and a cure package including a sulfur-based curing agent, zinc oxide, optionally a fatty acid, and a cure accelerator.

## Description

### FIELD

Described herein is a vulcanizable rubber composition and a pneumatic tire comprising such a rubber composition as a vulcanized rubber composition suitable for all-season wear and in particular for use in a tire tread with improved wet and ice performance without significant loss in snow performance and abrasion resistance.

### BACKGROUND

It is desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubber composition utilized in making the tire.

In order to reduce the rolling resistance and to improve the treadwear characteristics of tires, elastomers having a high rebound have traditionally been utilized in making tire tread rubber compounds. On the other hand, in order to increase the wet skid resistance of a tire, elastomers which undergo a large energy loss have generally been utilized in the tire's tread. In order to balance these two viscoelastically inconsistent properties, mixtures of various types of synthetic and/or natural rubber are normally utilized in tire treads.

For year-round use, tires with treads for promoting traction on snowy and icy surfaces as well as wet traction on wet roads are desirable.

Vulcanized rubber compositions have been developed for tire treads which include solution polymerized styrene-butadiene rubber (SSBR) in combination with a polybutadiene rubber (PBD), silica, and other additives, in selected proportions. For example, US Pub. No. 20200283602 A1 describes a pneumatic tire tread including a vulcanizable rubber composition including a specific SSBR and high-cis PBD, silica, and a resin selected from C5/C9 resins and DCPD/C9 resins. US Pub. No. 2017/0145195 A1 describes a pneumatic tire tread including a vulcanizable rubber composition including an SSBR, PBD, one or more hydrocarbon resins, and silica, in specific weight ratios. US Pub. No. 2010/0186869 A1 describes a vulcanizable rubber composition including an SSBR functionalized with an alkoxysilane group and at least one functional group selected from primary amines and thiols, a high-cis PBD, and silica.

Such rubber compositions tend to prioritize wet traction over snow performance or vice versa. There remains a need for a rubber composition for use in a tire tread which provides improved wet performance while maintaining performance in snow and providing good abrasion resistance.

### SUMMARY OF THE INVENTION

The invention relates to a vulcanizable rubber composition in accordance with claim 1, to a tire tread in accordance with claim 13, to a pneumatic tire in accordance with claim 14 and to a method in accordance with claim 15.

Dependent claims refer to preferred embodiments of the invention.

In accordance with a preferred embodiment, a tire tread suited to use in a pneumatic tire is formed from a vulcanizable rubber composition. The rubber composition includes 50 to 70 parts by weight per hundred parts rubber (phr) of polybutadiene rubber; 30 to 50 phr of a solution-polymerized styrene butadiene rubber with a styrene content of 5 to 15 wt. % and a Tg of -70°C to -50°C; at least 90 phr of silica; at least 6 parts by weight per hundred parts of the silica of an organosilane coupling agent; at least 2 phr of processing oil; at least 40 phr of resin, the resin including a hydrocarbon traction resin and a tackifier resin; and a cure package including: a sulfur-based curing agent, zinc oxide, and a cure accelerator.

In various preferred aspects of this embodiment, singly or in combination:
The rubber composition includes 55 to 65 phr of the polybutadiene rubber.

The rubber composition includes 35 to 45 phr of the solution-polymerized styrene butadiene rubber.

The solution-polymerized styrene butadiene rubber is functionalized with an alkoxysilane group and optionally at least one functional group selected from the group consisting of primary amines and thiols.

The rubber composition includes no more than 10 phr of polyisoprene rubber.

The rubber composition includes at least 100 phr, or at least 110 phr of the silica and/or up to 140 phr, or up to 130 phr of the silica.

The organosilane coupling agent includes a blocked mercapto organosilane, such as 3-octanoylthio-1-propyltriethoxysilane.

The rubber composition includes at least 50 phr of the resin, or at least 60 phr of the resin, and/or up to 90 phr of the resin, or up to 80 phr of the resin.

A ratio by weight of the hydrocarbon traction resin to the tackifier resin in the rubber composition is at least 8:1, or at least 10:1, or at least 15:1, or up to 30:1, or up to 25:1.

The tackifier resin includes a modified gum rosin.

The hydrocarbon traction resin includes a hydrogenated dicyclopentadiene (HDCPD)/C9 resin.

A ratio of the hydrocarbon traction resin to the processing oil in the rubber composition is at least 2:1, or at least 5:1, or at least 8:1, and/or up to 15:1.

The rubber composition includes 55 to 65 phr of the polybutadiene rubber; 35 to 45 phr of the solution-polymerized styrene butadiene rubber, which is functionalized with an alkoxysilane group; 100 to 160 phr of the silica; and the resin includes 60 to 70 phr of a traction resin and 2 to 4 phr of a tackifying resin.

The rubber composition includes at least 1 phr of a wax.

The rubber composition includes no more than 10 phr of carbon black.

The processing oil includes a vegetable oil. The vegetable oil is at least 3 phr, or at least 4 phr.

In accordance with another preferred embodiment, a method of forming a tire tread includes forming a vulcanizable rubber composition, including combining 50 to 70 phr of polybutadiene rubber; 30 to 50 phr of a functionalized solution-polymerized styrene butadiene rubber with a styrene content of 5 to 15 wt. % and a Tg of -70°C to -50°C; at least 100 phr of silica; at least 6 parts by weight per hundred parts of the silica of an organosilane coupling agent; at least 2 phr of processing oil; at least 40 phr of resin, the resin including a hydrocarbon traction resin and a tackifier resin; and a cure package including a sulfur-based curing agent, zinc oxide, and a cure accelerator; and shaping the vulcanizable rubber composition and curing the shaped vulcanizable rubber composition to form a tire tread.

A method of forming a tire may include forming the tire tread according to the method above, wherein the curing of the shaped vulcanizable rubber composition includes co-curing the shaped vulcanizable rubber composition with other vulcanizable components of a tire to form the tire.

In accordance with another embodiment, a tire includes a tread formed from a vulcanizable rubber composition, the rubber composition including 55 to 65 phr of polybutadiene rubber; 35 to 45 phr of a solution-polymerized styrene butadiene rubber functionalized with an alkoxysilane group, the solution-polymerized styrene butadiene rubber having a styrene content of 5 to 15 wt. % and a Tg of -70°C to -50°C; 100 to 140 phr of silica; at least 6 parts by weight per hundred parts of the silica of an organosilane coupling agent; at least 2 phr of processing oil; 60 to 70 phr of a traction resin; 2 to 4 phr of a tackifying resin; and a cure package including a sulfur-based curing agent, zinc oxide, a fatty acid, and a cure accelerator.

### DETAILED DESCRIPTION OF PREFERRED EMBODIMENTS OF THE INVENTION

In one embodiment, a vulcanizable rubber composition which is suited to forming a tire tread, includes:
a) 50 to 70 parts per hundred rubber, by weight (phr) polybutadiene rubber (PBD);
b) 30 to 50 phr of a solution-polymerized styrene butadiene rubber (SSBR) with a styrene content of 5-15 wt. % and a Tg of -70°C to -50°C;
c) 0 to 20 phr of one or more elastomers other than a) and b);
d) at least 100 phr of silica;
e) at least 6 parts by weight per hundred parts of the silica (phf) of an organosilane coupling agent;
f) at least 2 phr, and/or up to 15 phr, of processing oil, such as vegetable oil;
g) at least 40 phr of resin, the resin including a hydrocarbon traction resin, such as a hydrogenated dicyclopentadiene (HDCPD)/C9 resin, and a tackifier resin, such as a modified gum rosin;
h) optionally, at least 1 phr of a wax; and
i) a cure package including:
   i) a sulfur-based curing agent,
   ii) zinc oxide, and
   iii) a cure accelerator.

The cure package may further include iv) one or more organic activators, such as fatty acids, alkaline earth metal salts of fatty acids, and combinations thereof; and v) a cure retardant.

The rubber composition optionally includes additional rubber compounding materials, such as antioxidants, antiozonants, antidegradants, and the like.

When used to form a tire tread of a pneumatic tire, the rubber composition provides an improved combination of wet performance, abrasion resistance and snow performance, as determined by various predictors for these characteristics.

In another embodiment, a method of forming a tread of a pneumatic tire includes combining the components described above to form a vulcanizable rubber composition and curing the vulcanizable rubber composition to form the tread.

### DEFINITIONS

As used herein, the terms "rubber" and "elastomer" may be used interchangeably unless otherwise indicated. The terms "cure" and "vulcanize" may be used interchangeably unless otherwise indicated.

The term "tread," refers to both the region of a tire that comes into contact with the road under normal inflation and load as well as any subtread.

The term "phr" means parts per one hundred parts rubber by weight. In general, using this convention, a rubber composition includes 100 parts by weight of rubber/elastomer. The claimed composition may include other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. The term "phf" means parts per one hundred parts by weight of silica in the rubber composition.

Molecular weights of elastomers, rubber compositions, and resins, such as Mₙ (number average molecular weight), M_{w} (weight average molecular weight) and M_{z} (z average molecular weight), are determined herein using gel permeation chromatography (GPC) according to ASTM D5296-19, "Standard Test Method for Molecular Weight Averages and Molecular Weight Distribution of Polystyrene by High Performance Size-Exclusion Chromatography," using polystyrene calibration standards.

The glass transition temperature (Tg) of an elastomer or elastomer composition is the glass transition temperature(s) of the respective elastomer or elastomer composition in its uncured state or possibly a cured state in a case of an elastomer composition.

Tg values of elastomers are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

The glass transition temperature Tg for a resin is determined as a peak midpoint by a differential scanning calorimeter (DSC) at a temperature rate of increase of 10° C per minute, according to ASTM D6604-00 (2017), "Standard Practice for Glass Transition Temperatures of Hydrocarbon Resins by Differential Scanning Calorimetry."

The glass transition temperature Tg for an oil is determined as a peak midpoint by a differential scanning calorimeter (DSC) at a temperature rate of increase of 10°C per minute, according to ASTM E1356-08 (2014), "Standard Test Method for Assignment of the Glass Transition Temperatures by Differential Scanning Calorimeter."

The softening point of a resin is determined according to ASTM E28-18, "Standard Test Methods for Softening Point of Resins Derived from Pine Chemicals and Hydrocarbons, by Ring-and-Ball Apparatus," which is sometimes referred to as a ring and ball softening point.

Mooney viscosity (ML 1+4) is measured in M.U. at 100°C according to ASTM D1646-19a, "Standard Test Methods for Rubber-Viscosity, Stress Relaxation, and Pre-Vulcanization Characteristics (Mooney Viscometer)."

### A. The Vulcanizable Rubber Composition

Exemplary components of the rubber composition are now described.

### a) Polybutadiene Rubber (PBD)

The rubber composition includes at least 50 phr of PBD, or at least 55 phr, or up to 70 phr, or up to 65 phr, or 60 ± 2 phr of PBD.

The polybutadiene rubber may be a synthetic polybutadiene which is the homopolymerization product of a single monomer: butadiene. In one embodiment, a *cis-*1,4-polybutadiene rubber is used, i.e., a polybutadiene rubber in which cis-1,4-butadiene predominates.

Suitable polybutadiene rubbers may be prepared, for example, by organic solution polymerization of 1,3-butadiene. The PBD may be conveniently characterized, for example, by having at least a 90 wt. % cis-1,4-microstructure content ("high cis" content), or at least 95 wt. %, or at least 96 wt. %. The glass transition temperature (Tg), determined according to ASTM D3418, of the PBD may range from -95 to -112 °C. The PBD may have a Mooney viscosity, determined according to ASTM D1646, of 45-65 M.U.

Suitable polybutadiene rubbers are available commercially, such as Budene^{®} 1207, Budene^{®} 1208, Budene^{®} 1223, and Budene^{®} 1280 from The Goodyear Tire & Rubber Company. These high cis-1,4-polybutadiene rubbers can be synthesized utilizing nickel or neodymium catalyst systems, such as those which include a mixture of (1) an organonickel compound, (2) an organoaluminum compound, and (3) a fluorine containing compound, as described, for example, in U.S. Pat. Nos. 5,698,643 and 5,451,646. For example, Budene^{®} 1223 is a solution polymerized, high cis 1,4-polybutadiene stabilized with a non-staining antioxidant. This polymer is produced using a stereospecific neodymium catalyst which controls molecular weight distribution and provides a highly linear polymer weight distribution and provides a highly linear polymer. Budene^{®} 1223 has a Mooney viscosity (ML1+4 @ 100°C) of 55, a Tg of -106°C, an onset Tg, of -110°C, a cis-1,4 butadiene content of 96-97 wt. %, a maximum of 0.5 wt. %volatiles, and a specific gravity of 0.91.

### b) Solution-polymerized Styrene Butadiene Rubber (SSBR)

The rubber composition includes at least 30 phr, or at least 35 phr, or up to 50 phr, or up to 45 phr, or 40 ± 2 phr of the SSBR.

A ratio, by weight, of PBD to SSBR may be from 50:50 to 70:30, or at least 55:45, or up to 65:35, or about 60:40.

The SSBR has a low styrene content, e.g., of 5-15 wt. %, or at least 8 wt. %, or up to 12 wt. %, such as 10 ± 2 wt. %.

The exemplary SSBR may have a medium vinyl microstructure and a Tg of -70°C to -50°C, or at least -65°C, or up to -55 °C, such as -60 ± 5°C.

The SSBR may have an Mw of at least 400, or at least 450, or at least 500, or up to 700, or up to 650. The SSBR may have an Mn of at least 300, or up to 500 or up to 375.

The SSBR may be functionalized with various functional groups, or the SSBR may be non-functionalized. In one embodiment, the SSBR is functionalized with an alkoxysilane group and optionally at least one of a primary amine group and thiol group. Such an SSBR may be obtained by copolymerizing styrene and butadiene, with a primary amino group and/or thiol group and an alkoxysilyl group which are bonded to the polymer chain. In one embodiment, the alkoxysilyl group is an ethoxysilyl group.

The primary amino group and/or thiol group may be bonded to any of a polymerization initiating terminal, a polymerization terminating terminal, a main chain of the styrene-butadiene rubber and a side chain, as long as it is bonded to the styrene-butadiene rubber chain. The primary amino group and/or thiol group may be introduced to the polymerization initiating terminal or the polymerization terminating terminal, in that the disappearance of energy at a polymer terminal is inhibited to improve hysteresis loss characteristics.

The content of the alkoxysilyl group bonded to the polymer chain of the (co)polymer rubber may be 0.5 - 200 mmol/kg of the styrene-butadiene rubber, or from 1 to 100 mmol/kg of styrene-butadiene rubber, or from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. The alkoxysilyl group may be introduced to the polymerization initiating terminal or the polymerization terminating terminal, in that the disappearance of energy is inhibited from the (co)polymer terminal to be able to improve hysteresis loss characteristics. In one embodiment the alkoxysilyl group(s) is/are bonded to the main chain of the polymer, such that it is positioned intermediate the polymerization initiating terminal and the polymerization terminating terminal of the formed polymer.

In one embodiment, the styrene-butadiene rubber is produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure.

In one embodiment, the styrene-butadiene rubber can be produced as disclosed in U.S. Pub. No. 20220177610 A1. In other embodiments, the styrene-butadiene rubber can be produced as disclosed in US Pub. No. 20080287601 A1 or U.S. Pat. No. 7,342,070 B2.

As disclosed, for example in U.S. Pat. No. 7,342,070 B2, the butadiene rubber or styrene-butadiene rubber may be of the formula (I) or (II): 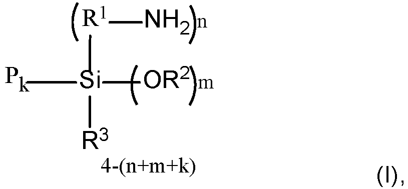 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 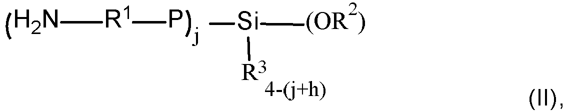 wherein P, R¹, R² and R³ have the same definitions as given for formula (I), j is an integer of 1 to 3, and h is an integer of 1 to 3, with the proviso that j+h is an integer of 2 to 4.

The rubber polymer of Formula (I) or (II) is terminated with a terminating agent compound having a protected primary amino group and an alkoxysilyl group. In one embodiment, the compound having a protected primary amino group and an alkoxysilyl group is selected from N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl) aminoethyl-trimethoxysilane, N,N-bis(trimethylsilyl)-aminoethyltriethoxysilane, N,N-bis(trimethylsilyl)aminoethylmethyldimethoxysilane, and N,N-bis(trimethylsilyl) aminoethyl-methyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III:

RN-(CH₂)_{X}Si(OR')₃, III,

wherein R in combination with the nitrogen (N) atom is a protected amine group which upon appropriate post-treatment yields a primary amine, R' represents a group having 1 to 18 carbon atoms selected from an alkyl, a cycloalkyl, an allyl, and an aryl; and X is an integer from 1 to 20. In one embodiment, at least one R group is an ethyl radical. By appropriate post-treatment to yield a primary amine, it is meant that subsequent to reaction of the living polymer with the compound having a protected primary amino group and an alkoxysilyl group, the protecting groups are removed. For example, in the case of bis(trialkylsilyl) protecting group as in N,N-bis(trimethylsilyl)aminopropyltriethoxysilane, hydrolysis is used to remove the trialkylsilyl groups and leave the primary amine.

As disclosed, for example in US Pub. No. 20220177610 A1, the diene rubber polymer may be end-functionalized with a polymerization terminator. The rubber polymer may be of the general structure: 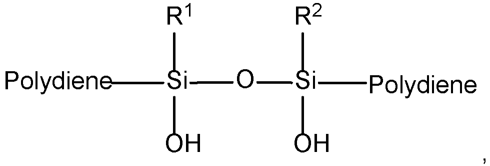 wherein "Polydiene" represents a polymer chain of at least one diene monomer and wherein R¹ and R² can be the same or different and represent alkyl groups containing from 1 to 8 carbon atoms.

The polymerization terminator can be of Structure (I) or Structure (II). The polymerization terminator of Structure (I) is of the form: 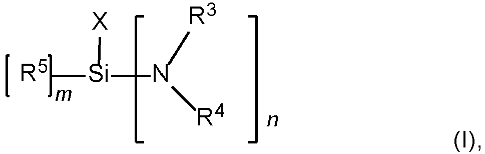 wherein X is selected from the group consisting of chlorine atoms, bromine atoms, and iodine atoms; m is an integer from 0 to 2, and n is an integer from 1 to 3, with the proviso that n+m=3; wherein R³ and R⁴ are independently alkyl groups or aryl groups containing from 1 to 18 carbon atoms, or wherein R³, R⁴ are independently -SiR⁶ groups, wherein R⁶ is independently selected from alkyl groups, aryl groups, alkoxy groups, or disubstituted amino groups, or wherein R³ and R⁴ taken together with a common nitrogen atom and optionally a sulfur or oxygen heteroatom form a five to eight membered ring; wherein R⁵ is hydrogen or an alkyl group, an aryl group, or R⁵ is an -SiR⁷ group wherein R⁷ is independently selected from alkyl groups, aryl groups, alkoxy groups, or disubstituted amino groups containing from 1 to 18 carbon atoms, or R⁵ is selected from -R⁸ and -R⁹, where R⁸ is alkanediyl containing from 1 to 3 carbon atoms, and R⁹ is selected from the following structures -S-Z,-N(R¹⁰)(R¹¹), -O(Y), and Si(OR¹²)₃, wherein R¹⁰ and R¹¹ are independently selected from alkyl groups and aryl groups containing from 1 to 18 carbon atoms, Y and Z are independently selected from the group consisting of methoxymethyl groups, tetrahydropyranyl groups, tetrahydrothiopyranyl groups, tetrahydrofuranyl groups, tert-butyl groups, allyl groups, 1-ethoxyethyl groups, benzyl groups, triphenylmethyl groups, triethylsilyl groups, triisopropylsilyl groups, trimethylsilyl groups, tert-butyl dimethyl silyl groups, tert-butyl diphenyl silyl groups, and isopropyldimethylsilyl groups, and wherein R¹² represents an alkyl group containing from 1 to 4 carbon atoms.

The polymerization terminator of Structure (II) is of the form: 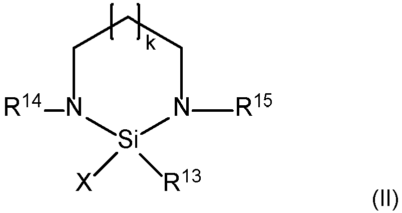 where R¹⁴, R¹⁵ are independently selected from alkyl groups and aryl groups containing from 1 to 18 carbon atoms, or R¹⁴, R¹⁵ are independently -SiR¹⁶ groups, wherein R¹⁶ is independently selected from alkyl groups, aryl groups, alkoxy groups, and disubstituted amino groups; wherein X is selected from the group consisting of chlorine atoms, bromine atoms, and iodine atoms; wherein R¹³ is hydrogen, an alkyl group, or an aryl group, or R¹³ is an - SiR¹⁷ group, wherein R¹⁷ is independently selected from alkyl groups, aryl groups, alkoxy groups, and disubstituted amino groups containing from 1 to 18 carbon atoms, or R¹³ is selected from -R¹⁸ and -R¹⁹, where R¹⁸ is an alkanediyl containing from 1 to 3 carbon atoms, and R¹⁹ is selected from the following structures -S-Z, -N(R²⁰)(R²¹), -O(Y), and Si(OR²²)₃, wherein R²⁰ and R²¹ are independently selected from alkyl groups and aryl groups containing from 1 to 18 carbon atoms, Y and Z are independently selected from the group consisting of methoxymethyl groups, tetrahydropyranyl groups, tetrahydrothiopyranyl groups, tetrahydrofuranyl groups, tert-butyl groups, allyl groups, 1-ethoxyethyl groups, benzyl groups, triphenylmethyl groups, triethylsilyl groups, triisopropylsilyl groups, trimethylsilyl groups, tert-butyl dimethyl silyl groups, tert-butyl diphenyl silyl groups, and isopropyldimethylsilyl groups, and wherein R²² represents an alkyl group containing from 1 to 4 carbon atoms; and wherein k is an integer from 0 to 10.

In one embodiment, the solution polymerized styrene-butadiene rubber is as disclosed in US Pub. No. 20080287601 A1 and is functionalized with an alkoxysilane group and a thiol, and includes the reaction product of a living anionic polymer and a silane-sulfide modifier represented by the formula IV:

(R⁴O)ₓR⁴_{y}Si-R⁵-S-SiR⁴₃ IV

wherein x is an integer selected from 1, 2 and 3; y is an integer selected from 0, 1, and 2; and x+y=3. Each R⁴ is the same or different and is selected from C₁-C₁₆ alkyl groups or C₁-C₅ alkyl groups. R' is an aryl, alkylaryl, or a C₁-C₁₆ alkyl. R⁵ is a C₁-C₁₆ alkyl, or a C₁-C₅ alkyl.

Suitable styrene-butadiene rubbers functionalized with an alkoxysilane group and a primary amine group are available commercially, such as HPR 340 from Japan Synthetic Rubber (JSR).

Suitable styrene-butadiene rubbers functionalized with an alkoxysilane group and a thiol group are available commercially, such as Sprintan SLR 3402 from Trinseo.

In one embodiment, the SSBR is a solution-polymerized, tin catalyzed, styrene-butadiene rubber, containing 10 wt. % styrene and 35 wt. % vinyl, functionalized with 3bis(dimethylamino)chloromethylsilane, having a Mooney viscosity (ML1+4 at 100°C) of about 130, a Tg of -59 ± 2, an Mw of about 621, an Mn of about 324, obtained as described in U.S. Pub. No. 20220177610 A1. One example of a tin catalyzed, emulsion polymerized styrene-butadiene rubber is available as PLIOFLEX^{®} 1502, from The Goodyear Tire and Rubber Company. It contains 23.5 wt.% bound styrene, a mixed acid emulsifier and is salt-acid coagulated.

### c) Other Elastomers

The rubber composition may include 0 to 20 phr, or up to 10 phr, or up to 5 phr, or up to 2 phr of one or more elastomers other than those described for a) and b), above.

The other vulcanizable elastomers may be selected from natural rubber, synthetic polyisoprene, halobutyl rubber, e.g., bromobutyl rubber and chlorobutyl rubber, nitrile rubber, liquid rubbers, polynorbornene copolymer, isoprene-isobutylene copolymer, ethylene-propylene-diene rubber, chloroprene rubber, acrylate rubber, fluorine rubber, silicone rubber, polysulfide rubber, epichlorohydrin rubber, styrene-isoprene-butadiene terpolymer, hydrated acrylonitrile butadiene rubber, isoprene-butadiene copolymer, butyl rubber, hydrogenated styrene-butadiene rubber, butadiene acrylonitrile rubber, a terpolymer formed from ethylene monomers, propylene monomers, and/or ethylene propylene diene monomer (EPDM), isoprene-based block copolymers, butadiene-based block copolymers, styrenic block copolymers, styrene-butadiene-styrene block copolymer (SBS), styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymers, co-polyester block copolymers, polyurethane block copolymers, polyamide block copolymers, thermoplastic polyolefins, thermoplastic vulcanizates, ethylene vinyl acetate copolymers, ethylene n-butyl acrylate copolymers, ethylene methyl acrylate copolymers, neoprene, acrylics, polyurethanes, polyacrylates and methacrylates, ethylene acrylic acid copolymers, polyether ether ketones, polyamides, atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate, and/or wherein the polymer optionally includes a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

In one embodiment, the rubber composition includes no more than 10 phr of polyisoprene elastomers (natural rubber and synthetic polyisoprene).

In one embodiment, PBD and SSBR are the only elastomers in the rubber composition or together may account for at least 95 phr or at least 98 phr of the elastomers.

### d) Reinforcing Fillers

The primary filler in the rubber composition is silica, which is present at 90 phr of the rubber composition, or greater, such as at least 100 phr, or at least 110 phr, or at least 115 phr, or up to 140 phr, or up to 130 phr. Expressed in terms of the total filler, silica may be present in the rubber composition in an amount of at least 80 phf, or at least 90 phf, or up to 100 phf, or up to 98 phf, or up to 95 phf.

The term "silica" is used herein to refer to silicon dioxide, SiOz (which may contain minor amounts of impurities, generally less than 1 wt. %, resulting from the process in which the silica is formed). The silica may be a precipitated silica which is formed by digesting amorphous silica with sodium hydroxide to form sodium silicate and precipitating silica from sodium silicate by reaction with an acidifying agent, such as sulfuric acid or carbon dioxide. The resulting precipitate is washed and filtered. Other methods of preparing particulate silica are described, for example, in U.S. Pat. Nos. 5,587,416 A, 5,708,069 A, 5,789,514 A, 5,800,608 A, 5,882,617 A, and 9,359,215 B2, and U.S. Pub. Nos. 2002/0081247 A1 and 2005/0032965 A1.

The silica may have a CTAB specific surface area of at least 120 m²/g, or at least 140 m²/g, or up to 400 m²/g, or up to 300 m²/g, or up to 230 m²/g. CTAB surface area is measured according to ASTM D6845-20, "Standard Test Method for Silica, Precipitated, Hydrated-CTAB (Cetyltrimethylammonium Bromide) Surface Area." This test method covers the measurement of the specific surface area of precipitated silica, exclusive of area contained in micropores too small to admit hexadecyltrimethylammonium bromide (cetyltrimethylammonium bromide, commonly referred to as CTAB) molecules.

The surface area of silica can also be measured through nitrogen adsorption in accordance with ASTM D1993-18, "Standard Test Method for Precipitated Silica-Surface Area by Multipoint BET Nitrogen Adsorption," which is referred to herein as nitrogen surface area. The nitrogen surface area tends to be slightly higher than the CTAB surface area, such as at least 130 m²/g, or at least 150 m²/g, or up to 420 m²/g, or up to 320 m²/g, or up to 240 m²/g.

Exemplary precipitated silicas which may be used include Hi-Sil^{™} 532, Hi-Sil^{™} 532 EP, and Hi-Sil^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, Premium SW, and 195HR from Solvay; Ultrasil^{™}, under the designations VN2, VN3, VN3GR, 5000GR, 7000GR, 9000GR from Evonik; Zeopol^{™}, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd.

Other particulate fillers may also be used in the rubber composition, such as one or more of carbon black, alumina, aluminum hydroxide, clay (reinforcing grades), magnesium hydroxide, boron nitride, aluminum nitride, titanium dioxide, and combinations thereof. Such particulate fillers, where used may be present in a total amount of 1 to 30 phr, or up to 20 phr, or up to 10 phr, or up to 5 phr.

In one embodiment, carbon black may be present in minor amounts, such as up to 10 phr. The carbon black may have a specific surface area of at least 8, or at least 20, or at least 100, or at least 120, or up to 132 m²/kg, as determined according to ASTM D6556-21, "Standard Test Method for Carbon Black-Total and External Surface Area by Nitrogen Adsorption." The specific (external) surface area, which is based on the statistical thickness method (STSA), is defined as the specific surface area that is accessible to rubber.

Exemplary carbon blacks useful herein include those with ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks have iodine absorptions, as determined according to ASTM D1510-21, ranging from 9 to 145 g/kg and a DBP absorption number, as determined according to ASTM D2414, ranging from 34 to 150 cm³/100 g. For example, N234 grade is a granular carbon black with an Iodine Absorption of about 120 g/kg, a CATB specific surface area of about 119 m²/kg, and a DBP absorption of about 125 m²/kg.

### e) Organosilane Coupling Agent

The organosilane coupling agent assists in dispersing the silica and in bonding the silica to the elastomers.

The amount of organosilane coupling agent may be selected based on the amount of reinforcing fillers, in particular, the silica in the rubber composition. In one embodiment the rubber composition includes at least 6 parts by weight per hundred parts of silica filler (phf) of the organosilane coupling agent or at least 8 phf, or up to 12 phf, or up to 10 phf. The amount of organosilane coupling agent in the rubber composition may be at least 5 phr, or at least 6 phr, or at least 7 phr, or up to 12 phr, or up to 10 phr.

Examples of organosilane coupling agents include those containing groups such as alkyl alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof.

Examples of mercapto silanes suitable for use include 1-mercaptomethyltri-ethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercapto-octadecyldiethoxychlorosilane, and mixtures thereof.

Blocked mercapto silanes include alkoxysilylalkylthio and alkylalkoxysilylalkylthio -acetates, -phosphonates, -phosphinates, -sulfates, -sulfonates, -alkanoates, - palmitates, and -benzoates, and mixtures thereof. Examples of such blocked mercapto silanes include 3-octanoylthio-1-propyltriethoxysilane (also known as 3-triethoxysilyl-1-propyl thiooctanoate), 2-triethoxysilyl-1-ethylthioacetate, 2-trimethoxysilyl-1-ethylthioacetate, 2-(methyldimethoxysilyl)-1-ethylthioacetate, 3-trimethoxysilyl-1-propylthioacetate, triethoxysilylmethyl-thioacetate, trimethoxysilylmethylthioacetate, triisopropoxysilylmethylthioacetate, methyldiethoxysilylmethylthioacetate, methyldimeth-oxysilylmethylthioacetate, methyldiisopropoxysilylmethylthioacetate, dimethyl-ethoxysilylmethylthioacetate, dimethylmethoxysilylmethylthioacetate, 1-(2-triethoxysilyl-1-ethyl)-4-thioacetylcyclohexane, 8-trimethoxysilyl-1-octylthioacetate, and mixtures thereof.

One example of a suitable blocked mercapto silane is 3-octanoylthio-1-propyltriethoxysilane, which is commercially available as NXT^{™} silane from Momentive

Performance Materials Inc., Albany, N.Y. Such a coupling agent also provides the tire with improved wet performance.

Other blocked mercaptosilane coupling agents are disclosed, for example, in U.S. Pat. No. 6,608,125 B2 and U.S. Pub. No. 2006/0041063 A1.

In another embodiment, the sulfur-containing organosilane includes the reaction product of a hydrocarbon based diol (e.g., 2-methyl-1,3-propanediol) with S-[3-(triethoxysilyl)propyl] thiooctanoate. Such a reaction product is available as NXT- Z^{™} from Momentive Performance Materials.

Other sulfur-containing coupling agents include bis(trialkoxysilyl-organo)polysulfides, such as bis(trialkoxysilylorgano) disulfides and bis(trialkoxysilyl-organo)tetrasulfides. Exemplary bis-(3-triethoxysilylpropyl) polysulfides may have an average of from 2 to 2.6 or from 3.5 to 4, connecting sulfur atoms in the polysulfidic bridge. One exemplary Bis-(3-triethoxysilylpropyl)disulfide has an average of 2.15 connecting sulfur atoms in the polysulfidic bridge, and is obtained as Si266^{™} from Evonik Industries. Bis(3-triethoxysilylpropyl)tetrasulfide (TESPT) is available as Si69^{®} from Evonik.

In one embodiment, the organosilane coupling agent is added to the rubber composition in the form of a pre-treated silica. The pre-treated silica can be one that has been pre-surface treated with an organosilane prior to being added to the rubber composition. The use of a pre-treated silica can allow for two ingredients (i.e., silica and a silica coupling agent) to be added as one ingredient, which generally tends to make rubber compounding easier and may also reduce the amount of organosilane coupling agent needed.

In another embodiment, the organosilane coupling agent is separately added to the rubber composition.

### f) Processing Oil

The rubber composition includes a processing oil. The oil may be at least 2 phr, or at least 3 phr, or at least 4 phr, or up to 15 phr, or up to 12 phr, or up to 10 phr, or up to 6 phr, in some embodiments.

The Tg of the oil or oils used may be -40°C to -100°C.

Suitable oils may include aromatic, paraffinic, naphthenic, vegetable oils, and low polycyclic aromatic (PCA) oils, such as MES, TDAE, SRAE and heavy naphthenic oils. Suitable low PCA oils may include those having a polycyclic aromatic content of less than 3 wt. % as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. In one embodiment, the vegetable oil includes or consists of soybean oil.

### g) Resin

The rubber composition includes at least 40 phr of resin, or at least 50 phr, or at least 60 phr, or up to 90 phr, or up to 80 phr, or up to 70 phr of resin. A weight ratio of resin to oil in the composition may be at least 2:1, or at least 5:1, or at least 8:1 or up to 15:1.

Unlike oils, which are liquids at room temperature (20-25°C), resins are generally solid or highly viscous at room temperature. For example, the resin may have a Tg of at least 40°, or at least 50°C, or up to 70°C, or as determined using DSC according to ASTM D6604.

The resin may include a hydrocarbon traction resin and a tackifier resin. A ratio of the hydrocarbon traction resin to tackifier resin, by weight, may be at least 5:1, or at least 8:1, or at least 10:1, or at least 15:1, or up to 40:1, or up to 30:1. In one embodiment, one or more of the resins is at least partially hydrogenated.

The rubber composition may include at least 38 phr of hydrocarbon traction resin, or at least 48 phr, or at least 58 phr, or up to 85 phr, or up to 78 phr, or up to 70 phr, or up to 65 phr of the hydrocarbon traction resin.

The hydrocarbon traction resin may have a softening point of at least 55°C, or at least 70° C, or at least 80° C, or up to 120°C, or up to 110°C, as determined according to ASTM E28. The Tg is generally lower than its softening point, and the lower the Tg the lower the softening point. The hydrocarbon traction resin may have a Tg of at least 50°C, or up to 65°C, or up to 60°C, as determined using DSC according to ASTM D6604.

Petroleum-based resins suitable as traction resins include both aromatic and nonaromatic resins. Examples of aromatic resins include aromatic homopolymer resins and aromatic copolymer resins. An aromatic copolymer resin refers to a hydrocarbon resin which includes a combination of one or more aromatic monomers in combination with one or more other (non-aromatic) monomers, with the majority by weight of all monomers generally being aromatic. Aromatic resins may have a Mw of at least 1000 grams/mole and/or up to 4000 grams/mole.

The hydrocarbon traction resin may be selected from C5 resins, including polydicyclopentadiene (DCPD) and hydrogenated equivalents thereof such as HC5 resins and hydrogenated DCPD resins (HDCPD); C9 resins, and hydrogenated equivalents thereof such as HC9 resins; and copolymers and mixtures thereof, such as C5/C9 resins, including DCPD/C9 resins, HDCPD/C9 resins, and mixtures thereof. In the abbreviations, H indicates that the resin is at least partially hydrogenated, and C5 and C9 indicate the number of carbon atoms, prior to any dimerization or functionalization, in the monomers from which the resins are formed. Other hydrocarbon traction resins which may be used include terpene-phenol resins, terpene resins, terpene-styrene resins, styrene/alpha-methylstyrene resins, and coumarone-indene resins.

Some hydrocarbon resins have a low degree of unsaturation and high aromatic content, whereas others are highly unsaturated and may contain no aromatic structure at all. Differences in the resins are largely due to the olefins in the feedstock from which the resins are derived. C5 resins are generally derived from aliphatic monomers containing an average of five carbon atoms, such as one or more of cyclopentene, 1,3-pentadiene (e.g., cis or trans), 2-methyl-2-butene, cyclopentadiene, dicyclopentadiene (a dimer of cyclopentadiene), and diolefins such as isoprene and piperylene. C9 resins are derived from aromatic olefins containing an average of 9 carbon atoms, such as one or more of vinyl toluene, methylstyrene, such as alpha-methylstyrene, indene, and methylindene. Resins may also be formed from mixtures of the C5 and C9 monomers mentioned above, and are therefore known as C5/C9 copolymer resins. In one embodiment, the C5 fraction used in the C5/C9 resin is predominantly dicyclopentadiene (DCPD).

Dicyclopentadiene readily copolymerizes with many vinyl monomers and resins including alkyds, unsaturated esters, phenolics and epoxies. It also functions as a reactive diluent, cross-linking agent, and curative.

Vinyl aromatic resins useful as the C9 fraction of DCPD/C9 and HDCPD/C9 resins may include one or more of the following monomers: styrene, alpha-methylstyrene, beta-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinylnaphthalene, indene, methylindenes, xylene, vinyl toluenes, alkylsubstituted derivatives thereof, and mixtures thereof.

In one embodiment, the hydrocarbon traction resin is functionalized and/or partially hydrogenated.

An exemplary hydrocarbon traction resin is hydrogenated dicyclopentadiene (HDCPD)/C9 resin.

In one embodiment, the C5/C9 resin, e.g., DCPD/C9 or HDCPD/C9 resin, has an aromatic hydrogen content, as determined by 1H NMR, of at least 5 mole %, or at least 8 mole %, or up to 25 mole %, or up to 20 mole % or up to 15 mole %, or 10 ± mole %, with the balance being aliphatic hydrogen content.

In one embodiment, the C5/C9 resin is substantially free (e.g., contains no more than 5 wt. %, or no more than 2 wt. %) of isoprene.

In one embodiment, the C5/C9 resin is substantially free (e.g., contains no more than 5 wt. %, or no more than 2 wt. %) of amylene.

The C5/C9 resin may include less than 15% indenic components, or less than 10 wt. %, or less than 5 wt. %, or less than 2 wt. % of indenic components. Indenic components include indene and derivatives of indene.

The C5/C9 resin may have a glass transition temperature Tg of greater than 50° C, or up to 70°C, such as 55 ±5 °C, as determined using DSC according to ASTM D6604. The C5/C9 resin may have a softening point of 80° C to 160° C, as determined by ASTM E28 (ring and ball softening point). The C5/C9 resin may have melt viscosity, at 160 °C, of from 300 to 800 centipoise (cPs), or from 350 to 650 cPs, or from 375 to 615 cPs, or from 475 to 600 cPs, as measured by a Brookfield viscometer with a type "J" spindle, in accordance with ASTM D6267.

The C5/C9 resin may have a weight average molecular weight (Mw) of at least 500 g/mole, or at least 600 g/mole, or at least 700 g/mole, or up to 1000 g/mole, or up to 900 g/mole, or up to 800 g/mole, as determined by gel permeation chromatography (GPC). The C5/C9 resin may have a number average molecular weight (Mn) of at least 350 g/mole, or at least 400 g/mole, or at least 450 g/mole, or up to 600 g/mole, as determined by gel permeation chromatography (GPC). In one embodiment, the C5/C9 resin has a polydispersion index ("PDI", PDI=Mw/Mn) of 4 or less, e.g., from 1.3:1 to 3.1.

In one embodiment, the resin is a HDCPD/C9 resin. A suitable HDCPD/C9 resin is available as Oppera^{™} PR 383 from Exxonmobil. This resin has an aromatic hydrogen content of about 10 mole %, an aliphatic hydrogen content of about 89 mole %; a softening point (ring and ball method), of about 103°C; a Tg of 55°C; an Mn of 480 g/mol; and an Mw of 770 g/mol.

The traction resin helps to improve/maintain the wet traction of a tire, which can be estimated from tan delta values at 0°C.

Additional hydrocarbon-based traction resins are described in U.S. Pat. No. 11,214,667 B2. U.S. Pub. No. 20200056018 A1 describes modified hydrocarbon thermoplastic resins for use in rubber compositions.

Tackifier resins suited to use in the rubber composition may be derived from naturally-occurring rosins and derivatives thereof, including, for example, gum rosin, wood rosin, and tall oil rosin. Gum rosin, wood rosin, and tall oil rosin have similar compositions, although the amount of components of the rosins may vary. Such resins may be dimerized, polymerized or disproportionated. Such resins may be in the form of esters of rosin acids and polyols such as pentaerythritol or glycol.

In one embodiment, the tackifier resin is or includes a modified gum rosin.

The tackifier resin, when used, may be at least 1 phr, or at least 2 phr, or up to 5 phr.

Other example resins which may be used in the rubber composition, in addition to the exemplary traction resin and tackifying resin, include unreactive phenol formaldehyde, reactive phenol formaldehyde resins, and resorcinol or resorcinol, hexamethylene tetramine, and benzoxazine resins which, where present, may be used in a total amount of 1 to 10 phr, or up to 3 phr.

### h) Wax

The rubber composition may include one or more waxes, e.g., selected from paraffin wax, microcrystalline wax, and mixtures thereof.

The wax, where used, may be present at 1-5 phr, or up to 3 phr.

### i) Cure Package

The cure package includes i) a sulfur-based curing (vulcanizing) agent, ii) zinc oxide, iii) a cure accelerator, and optionally, one or more of an organic cure activator and a cure inhibitor. The cure package may be used in the rubber composition at 0.5 to 20 phr, or at least 5 phr, or up to 10 phr.

### i) Sulfur-Based Curing aAgent

Examples of suitable sulfur-based curing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur-based curing agents may be used in an amount of from 0.1 to 10 phr, such as at least 0.4 phr, or up 5 phr, or up to 2 phr.

### ii) Cure Accelerators, Cure Activators, Free Radical initiators, and Inhibitors

Cure accelerators and activators act as catalysts for the vulcanization agent. Cure accelerators are used to control the time and/or temperature required for vulcanization and to improve the properties of the vulcanizate. In one embodiment, a single accelerator system may be used, i.e., primary accelerator. A primary accelerator may be used in amounts ranging from 0.5 to 5 phr. In another embodiment, combinations of two or more accelerators may be used. In this embodiment, a primary accelerator is generally used in the larger amount (0.5 to 3 phr), and a secondary accelerator is generally used in smaller amounts (0.05 to 0.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures.

Representative examples of accelerators include amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound, although a second sulfenamide accelerator may be used.

Examples of thiazole cure accelerators include 2-mercaptobenzothiazole, 2,2'-dithiobis(benzothiazole) (MBTS). Guanidine cure accelerators include diphenyl guanidine (DPG). Examples of sulfenamide cure accelerators include benzothiazole sulfenamides, such as N-cyclohexyl-2-benzothiazolesulfenamide (CBS), and N-tert-butyl-2-benzothiazole-sulfenamide (TBBS).

Cure accelerators having a fast cure initiation time, typically less than 3 minutes, are referred to as ultra-accelerators. Example ultra-accelerators which may be used alone or in combination with other accelerators include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, copper dimethyl dithiocarbamate, tellurium diethyl dithiocarbamate (TDEC), zinc dibenzyl dithiocarbamate (ZBED), zinc diisononyl dithiocarbamate, zinc pentamethylene dithiocarbamate, zinc dibenzyldithiocarbamate (ZBEC), zinc isopropyl xanthate (ZIX), zinc butyl xanthate (ZBX), sodium ethyl xanthate (SEX), sodium isobutyl xanthate (SIBX), sodium isopropyl xanthate (SIPX), sodium n-butyl xanthate (SNBX), sodium amyl xanthate (SAX), potassium ethyl xanthate (PEX), potassium amyl xanthate (PAX), zinc 2-ethylhexylphosphorodithioate (ZDT/S), and mixtures thereof.

The amount of the cure accelerator may be from 0.1 to 10 phr, or at least 0.5 phr, or at least 2 phr, or at least 4 phr, or up to 8 phr, or up to 6 phr.

Cure activators are additives which are used to support vulcanization. Cure activators include both inorganic and organic cure activators. Zinc oxide is the most widely used inorganic cure activator and may be present at 1 phr to 10 phr, e.g., at least 1.5 phr, or at least 2 phr, or up to 5 phr, or up to 4 phr.

Organic cure activators include stearic acid, palmitic acid, lauric acid, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylene-thiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

The total amount of organic cure activator(s), such as a mixture of fatty acids, may be from 0.1 to 6 phr, such as at least 0.5 phr, or at least 1 phr, or at least 2 phr, or up to 4 phr.

Free radical initiators, which may be used in some embodiments, are sometimes known as redox initiators, and include combinations of chelated iron salts, sodium formaldehydesulfoxylate, and organic hydroperoxides. Representative organic hydroperoxides include cumene hydroperoxide, p-menthane hydroperoxide, and tertiary butyl hydroperoxide. The free radical initiator may be used in combination with, or as an alternative to, a sulfur-based vulcanizing agent. The amount of free radical initiator, where used, may be 0.1 to 4 phr, or 0.5 to 2 phr. In other embodiments, free radical initiators are absent from the rubber composition.

Cure inhibitors are used to control the vulcanization process and generally retard or inhibit vulcanization until the desired time and/or temperature is reached. Example cure inhibitors include cyclohexylthiophthalimide.

The amount of cure inhibitor, if used, may be 0.1 to 3 phr, or 0.5 to 2 phr. In one embodiment, no cure inhibitor is used.

The rubber composition may further include other components, such as colorants, antioxidants, antiozonants and peptizing agents.

Exemplary amounts of antioxidants are from 1 to 5 phr. Representative antioxidants include aryl p-phenylene diamines, such as diphenyl-p-phenylenediamine and alkyl aryl p-phenylene diamine, such as N-(1,3 dimethyl butyl)-N'-phenyl-p-phenylene diamine, and others, such as, for example, those disclosed in The Vanderbilt Rubber Handbook (1978), pages 344 through 346.

Exemplary amounts of antiozonants (other than waxes, discussed above) are 1 to 5 phr.

### Preparation of the Rubber Composition

Rubber compositions may be prepared by mixing the vulcanizable elastomers, silica and carbon black, and other rubber compounding ingredients, not including the curing agent, in at least one sequential mixing stage with at least one mechanical mixer, usually referred to as a "non-productive" mixing stage, or stage(s), to an elevated temperature under high shear rubber mixing conditions, followed by a final "productive" mixing stage, in which a sulfur-based cure package, such as a sulfur-based curing agent and cure accelerator(s), is added to the mixture and mixed at a lower mixing temperature to avoid unnecessarily pre-curing the rubber mixture during the productive mixing stage. The ingredients may be mixed in the non-productive mixing stage(s) for 2 minutes to a temperature of temperature of 130°C to 200°C, e.g., about 145°C. Once the cure package is added (or at least the curing agent), the subsequent productive mixing step may be conducted at a temperature below the vulcanization (cure) temperature and/or for a short time, in order to avoid unwanted pre-cure of the rubber composition, e.g., no more than 120°C, such as at least 40°C, or at least 60°C, e.g., for 2 minutes to a temperature of 110-115°C. Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill or sheeted out by a roller die, and allowed to cool to below 40°C after each mixing step.

When the cure package is thoroughly mixed, the rubber composition may be molded or otherwise formed into the shape of a green component of a tire, such as a tire tread. The temperature of the green component may be raised to effect cure. Curing of the pneumatic tire or a part thereof may be carried out at a temperature of from 120°C to 200°C, e.g., at least 140°C, or up to 180°C, or about 150°C, for at least 10 minutes. Any of the usual vulcanization processes may be used, such as heating in a press or mold, or heating with superheated steam or hot air. Such tires can be built, shaped, molded and cured by various methods which are known and will be readily apparent to those having skill in such art.

The use of silica fillers may optionally necessitate a separate re-mill stage for separate addition of a portion or all of such filler. This stage often is performed at temperatures similar to, although often slightly lower than, those employed in the other productive mixing stages, e.g., ramping from 90°C to 150°C.

In one embodiment, a tire is provided, the tire having a tread which is formed, at least in part, from the exemplary rubber composition. Other parts of the tire, such as the tire sidewalls, may additionally, or alternatively, be formed, at least in part, from a rubber composition as described herein. The tire may be a pneumatic tire for an on-the-road vehicle, such as a bus or truck, or an automobile, or a tire for an off-road vehicle, or airplane.

The rubber composition is not limited to use in tires but may find application in rubber gloves and surgical instruments for instance.

### Example Rubber Compositions

Table 1 illustrates exemplary rubber compositions in accordance with aspects of the exemplary embodiment.

**Table 1: Example Rubber Compositions**

| Component | Example 1 (phr) | Example 2 (phr) |
|---|---|---|
| Polybutadiene | 50 - 70 | 55 - 65 |
| SSBR, with low styrene content (no more than 15 % by weight) | 30 - 50 | 35 - 45 |
| Silica | 100 - 140 | 110 - 130 |
| Carbon black | 0 - 10 | 1 - 5 |
| Organosilane coupling agent, e.g., blocked mercapto organosilane | 5 - 15 | 7 - 12 |
| Vegetable oil, e.g., soybean oil | 2 - 15 | 3 - 6 |
| Traction resin, e.g., (HDCPD)/C9 resin | 40 - 80 | 55 - 70 |
| Tackifying resin, e.g., modified gum rosin | 1 - 5 | 2 - 4 |
| Wax | 1 - 5 | 1 - 3 |
| Sulfur-based curing agent | 0.5 - 4 | 1 - 3 |
| Zinc oxide | 1 - 6 | 1.5 - 4.5 |
| Fatty acid activator | 0.5 - 5 | 0.5 - 3 |
| Accelerators | 2 - 9 | 3 - 8 |
| Antioxidants and antiozonants | 1 - 6 | 1.5 - 5 |

The use of the exemplary rubber composition in tires, such as in tire treads, may result in a tire having improved or desirable tread properties. These improved or desirable properties may include improved wet performance, without a noticeable loss in snow performance and abrasion resistance.

Without intending to limit the scope of the exemplary embodiment, the following examples illustrate preparation of an exemplary rubber composition and properties thereof.

### EXAMPLES

Rubber compositions are formulated using the ingredients listed in Table 2. The rubber compositions are prepared as follows:
The elastomers and some other ingredients, except for the sulfur and cure accelerators are mixed in a first non-productive mixing stage (NP1) in an internal rubber mixer for about 4 minutes to a temperature of about 160° C. The rubber mixture is mixed in a second non-productive mixing stage (NP2) in an internal rubber mixer for about 4 minutes to a temperature of about 160° C. The resulting rubber mixture is then mixed in a productive mixing stage (PR) in an internal rubber mixer with sulfur and sulfur cure accelerator(s) for about 2 minutes to a temperature of about 110° C. The rubber composition is sheeted out and cooled to below 50° C between each of the non-productive mixing steps and prior to the productive mixing step.

**TABLE 2:**

| Ingredients of Rubber Compositions (in phr) | | |
|---|---|---|
| **Ingredient** | **Comparative Example A** | **Example B** |
| Polybutadiene ¹ | 44 | 60 |
| ESBR ² | 31 | |
| SSBR ³ | 25 | |
| Oil used in extending SSBR ⁴ | 5 | |
| SSBR ⁵ | | 40 |
| Silica ⁶ | 90 | 120 |
| Carbon black ⁷ | 2 | 2 |
| Vegetable oil ⁸ | 12 | 5 |
| Traction resin ⁹ | | 62 |
| Tackifying resin ¹⁰ | | 3 |
| AMS resin ¹¹ | 20 | |
| Disulfide organosilane coupling agent ¹² | 7.6 | |
| Blocked mercapto organosilane coupling agent ¹³ | | 9.6 |
| Antioxidants and antiozonants ¹⁴ | 2.75 | 3.5 |
| Fatty acid activator¹⁵ | 2 | 2 |
| Accelerators¹⁶ | 4.5 | 5.4 |
| Wax | 1 | 2 |
| Zinc oxide | 1.75 | 2.5 |
| Sulfur-based curing agent¹⁷ | 1.35 | 1.81 |

| | | |
|---|---|---|
| ¹ Solution polymerized, high cis-1,4 polybutadiene stabilized with a non-staining antioxidant, obtained as BUDENE^{®} 1223, from The Goodyear Tire and Rubber Company. This polymer is produced using a stereospecific neodymium catalyst which controls molecular weight distribution and provides a highly linear polymer weight distribution and provides a highly linear polymer. Mooney viscosity (ML1+4 at 100°C) of 55, Tg of -106°C, onset Tg of -110°C, cis-1,4 butadiene content, 96-97 wt. %, volatiles, 0.5 wt. % maximum, specific gravity 0.91. ² Tin catalyzed, emulsion polymerized styrene-butadiene rubber, 23.5 wt.% bound styrene, obtained as PLIOFLEX^{®} 1502, from The Goodyear Tire and Rubber Company. It contains a mixed acid emulsifier and is salt-acid coagulated. ³ Solution-polymerized styrene-butadiene rubber, 33 wt. % styrene (extended with 20 phr soybean oil -specified separately in Table 2) ⁴ Soybean oil in SSBR³ ⁵ Solution-polymerized, tin catalyzed, styrene-butadiene rubber, 10 wt. % styrene, functionalized with 3bis(dimethylamino)chloromethylsilane, 35 wt. % vinyl, Mooney viscosity (ML1+4 at 100°C) of 130, a Tg of -59 ± 2, an Mw of 621, an Mn of 324, obtained as described in U.S. Pub. No. 2022/0177610 A1. ⁶ Precipitated silica having a BET nitrogen surface area of about 165 m²/g and a CTAB surface area of about 160 m²/g, obtained as Zeosil^{™} 1165 from Solvay. ⁷ ASTM Grade N234 carbon black. ⁸ Soybean oil, serves as a plasticizer. ⁹ Traction and plasticizing resin, hydrogenated dicyclopentadiene (HDCPD)/C9 resin; 10 wt. % aromatic; 89 wt. % aliphatic; softening point (ring and ball method), about 103°C; Tg, 55°C; Mn 480 g/mol; Mw 770 g/mol; obtained as Oppera^{™} PR 383 from Exxonmobil. ¹⁰ Modified gum rosin (not hydrocarbon) tackifying resin, with a softening point of 97°C, obtained as Resinall^{™} 224 from Resinall Corp. ¹¹ Alpha-methyl styrene resin, obtained as Sylvatraxx^{™} 4401 from Kraton Chemical. ¹² Bis-(3-triethoxysilylpropyl)disulfide with an average of 2.15 connecting sulfur atoms in the polysulfidic bridge, obtained as Si266^{™} from Evonik Industries. ¹³ 3-Octoanoylthio-1-propyltriethoxysilane obtained as NXT^{™} silane from Momentive Performance Materials. ¹⁴ Mixture of aryl p-phenylene diamines and N-(1,3 dimethyl butyl)-N'-phenyl-p-phenylene diamine. ¹⁵ Mixture of fatty acids, predominantly stearic acid. ¹⁶ Mixture of N-cyclohexyl-2-benzothiazolesulfenamide (CBS) and N,N'-diphenyl guanidine (DPG). ¹⁷ Elemental sulfur. | | |

The rubber compositions are formed into appropriately-sized samples and subjected to various tests. Table 3 illustrates the test results predictive of performance. Values for Example A are normalized to 100.

**TABLE 3:**

| Performance Prediction Tests (higher is better) | | |
|---|---|---|
| **Predictor** | **Ex. A** | **Ex. B** |
| **Wet** | | |
| Zwick Rebound at 0°C ^{A} | 100 | 133 |
| Tan Delta at 0°C (3% strain, 10Hz) ^{B} | 100 | 124 |

| **Snow** | | |
|---|---|---|
| G' at -20C (3% strain, 10Hz) MPa^{C} | 100 | 97 |

| **Wear** | | |
|---|---|---|
| Relative Volume Loss ^{D} | 100 | 99 |

| | | |
|---|---|---|
| ^{A} Rebound is a measure of hysteresis of the compound when subject to loading, as measured with a Zwick Roell 5109 Rebound Resilience Tester at a given temperature, in accordance with ASTM D7121-05(2018). Generally, the lower the measured rebound at 0° C, the better the grip on wet road surface.. ^{B} The loss factor, Tangent delta (Tan delta or Tan Δ), is a measure of hysteresis and is determined as a ratio of the loss modulus (G") to the dynamic storage modulus, or elastic modulus (G') at a given temperature, strain, and frequency (here measured on cured samples using an ARES Rotational Rheometer rubber analysis instrument, according to ASTM D5992). Generally, the higher tan delta at lower temperatures indicates that the material is predicted to perform better for wet traction. ^{C} G' at a cold temperature (here measured on cured samples using an ARES Rotational Rheometer rubber analysis instrument, according to ASTM D5992) is an indicator of elasticity in winter conditions. ^{D} Abrasion is determined in terms of volume loss, according to D5963-22, "Standard Test Method for Rubber Property-Abrasion Resistance (Rotary Drum Abrader)," using a Zwick Roell drum abrasion unit. Generally, the lower the relative volume loss, the higher the abrasion resistance of the rubber composition. | | |

Based on Table 3, the Example B composition is expected to provide improved wet performance, equivalent snow performance, and equivalent abrasion resistance to Example A.

Evaluations are performed on tires of three different sizes with treads formed of the example rubber compositions. Cars fitted with the tires are driven on respective testing surfaces. Averaged results are shown in Table 4 (results for Example A are all normalized to 100). Thus, for Example B, 100 means approximately the same, values greater than 100 indicate better performance, while values below 100 indicate not as good as comparative Example A.

**TABLE 4:**

| Road Performance (Average over three tire sizes) | | |
|---|---|---|
| **Test** | **Example A** | **Example B** |
| Wet stopping rating | 100 | 101 |
| Ice Braking Distance | 100 | 103 |
| Snow stopping distance | 100 | 102 |
| Dry stopping rating | 100 | 101 |

The results in TABLE 4 indicate that the tires with the Example B composition performed well, on average, over a range of road and weather conditions.

Each of the documents referred to above is incorporated herein by reference. Singular forms, such as "a" and "an" are intended to encompass plural forms unless the context indicates otherwise. Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. The compounds mentioned in the description can, in some cases, be of fossil origin, derived from biomass, and/or from recycled materials. For example, compounds may be partially or totally derived from biomass or obtained from renewable raw materials derived from biomass. Recycled materials may include waste tires and other rubber-containing materials. It is to be understood that the upper and lower amount, range, and ratio limits set forth herein may be independently combined. Similarly, the ranges and amounts for each element of the invention may be used together with ranges or amounts for any of the other elements.

## Claims

1. A vulcanizable rubber composition for use in a tire tread, the rubber composition comprising:
50 to 70 parts by weight per hundred parts rubber (phr) of polybutadiene rubber;
30 to 50 phr of a solution-polymerized styrene butadiene rubber with a styrene content of from 5 to 15 wt. % and a Tg in a range of from -70°C to -50°C;
at least 90 phr of silica, alternatively at least 100 phr of silica or from 90 to 160 phr of silica;
at least 6 parts by weight per hundred parts of the silica of an organosilane coupling agent;
at least 2 phr of processing oil;
at least 40 phr of resin, the resin comprising a hydrocarbon traction resin and a tackifier resin; and
a cure package including a sulfur-based curing agent, zinc oxide, optionally a fatty acid, and a cure accelerator.

2. The rubber composition of claim 1, wherein the rubber composition comprises of from 55 to 65 phr of the polybutadiene rubber and/or wherein the rubber composition comprises of from 35 to 45 phr of the solution-polymerized styrene butadiene rubber.

3. The rubber composition of claim 1 or 2, wherein the solution-polymerized styrene butadiene rubber is functionalized with an alkoxysilane group and/or at least one functional group selected from the group consisting of primary amines and thiols.

4. The rubber composition of at least one of the previous claims, wherein the rubber composition comprises no more than 10 phr of polyisoprene rubber.

5. The rubber composition of at least one of the previous claims, wherein the organosilane coupling agent comprises a blocked mercapto organosilane.

6. The rubber composition of at least one of the previous claims, wherein the rubber composition comprises at least 50 phr of the resin or at least 60 phr of the resin; and/or wherein the rubber composition comprises up to 90 phr of the resin.

7. The rubber composition of at least one of the previous claims, wherein a ratio by weight of the hydrocarbon traction resin to the tackifier resin in the rubber composition is at least 8:1, at least 10:1 or at least 15:1.

8. The rubber composition of at least one of the previous claims, wherein the tackifier resin comprises a modified gum rosin; and/or wherein the hydrocarbon traction resin comprises a hydrogenated dicyclopentadiene (HDCPD)/C9 resin.

9. The rubber composition of at least one of the previous claims, wherein a ratio of the resin to the processing oil in the rubber composition is at least 2:1, at least 5:1 or at least 8:1; and/or wherein a ratio of the resin to the processing oil in the rubber composition is up to 15:1.

10. The rubber composition of at least one of the previous claims, wherein the rubber composition comprises:
55 to 65 phr of the polybutadiene rubber;
35 to 45 phr of the solution-polymerized styrene butadiene rubber functionalized with an alkoxysilane group; and
100 to 160 phr of the silica.

11. The rubber composition of at least one of the previous claims, wherein the rubber composition comprises: 60 to 70 phr of a traction resin and 2 to 4 phr of a tackifying resin.

12. The rubber composition of at least one of the previous claims, wherein the rubber composition comprises at least 1 phr of a wax and/or wherein the rubber composition comprises no more than 10 phr of carbon black.

13. A tire tread comprising the rubber composition of at least one of the previous claims as a vulcanized rubber composition.

14. A pneumatic tire comprising the tread of claim 13.

15. A method of forming a tire tread, the method comprising:
providing a vulcanizable rubber composition in accordance with at least one of the claims 1 to 12; and
shaping the vulcanizable rubber composition and curing the shaped vulcanizable rubber composition to form a tire tread.
